# EUROPEAN PATENT SPECIFICATION

(11) **EP 2 537 419 B1**
(45) Date of publication and mention of the grant of the patent: **04.07.2018**
(21) Application number: 11744306.9
(22) Date of filing: 03.02.2011
(51) Int. Cl.: A23L 19/00

(54) **METHOD FOR PRESERVING FRESH CUT LEMON**
VERFAHREN ZUR KONSERVIERUNG FRISCH GESCHNITTENER ZITRONEN
PROCÉDÉ DE CONSERVATION DE CITRON NATUREL COUPÉ

(30) Priority: 18.02.2010 ES 201030234
(43) Date of publication of application: 26.12.2012
(73) Proprietor: Lunacitric, S.A., 31579 Carcar (Navarra) (ES)
(72) Inventor: LOPEZ INSAUSTI, Rafael, E-31579 Carcar (Navarra) (ES); ITOIZ AVINZANO, Reyes, E-31579 Carcar (Navarra) (ES); GARCIA DE LA TORRE, Silvia, E-31579 Carcar (Navarra) (ES); GONZALEZ NAVARRO, Carlos Javier, E-31579 Carcar (Navarra) (ES)
(74) Representative: Temiño Ceniceros, Ignacio
(86) International application number: PCT/ES2011/070072
(87) International publication number: WO 2011/101517

(56) References cited:
- EP-A1- 0 141 875
- EP-A1- 0 141 875
- WO-A1-94/19959
- WO-A1-2010/098333
- CN-C- 100 382 721
- JP-A- H01 206 966
- JP-A- S62 259 541
- KR-A- 20040 037 653
- US-A- 3 025 169
- US-A- 3 707 383
- US-A- 4 006 257
- US-A- 4 006 257

## Description

The object of the present invention is a method for preserving fresh cut lemon, into slices, sections or pieces, in cans or plastic at room temperature, while maintaining all of its natural organoleptic properties. The objective is achieved a canned food with a duration of the lemon properties comprised between a minimum of four months and two years.

### State of the prior art

Currently, the lemon cut into pieces and slices is preserved by different methods. The most common of them is freezing, where the fresh lemon, cut into pieces or slices at temperatures below zero degrees, while the one conserved in plastic is at a temperature refrigerated between 2 and 5 degrees, with a maximum duration of one month in preservation.

It has tried to preserve the fresh cut lemon at room temperature in plastic and glass packaging with a result of a preservation of 2 to 2.5 months at a temperature of 20 degrees.

JPS62259541 discloses a method for the production of lemon immersed in syrup consisting of slicing lemons boiled in hot water containing sodium hydrogencarbonate, making a saccharide solution permeate the slice lemons, further putting the lemons and the saccharide solution in cans, sealing and sterilizing under heating.

WO94/19959 divulges a system for processing citrus fruits consisting of cutting into pieces of citrus fruits by automatic and aseptic means; vacuum packaging of the cut citrus fruits and presentation of the citrus fruits packed in a sanitary and aseptic way for its consumption.

WO2010098333 provides a dried cut citrus fruit characterized by a 5-30 wt.% water content, and 80 wt.% or less of the saccharides are sucrose.

JPH01206966 discloses a lemon lightly utilizable for food, cooking, beauty, bath, leisure, sports, etc., by cutting a lemon into round thin slices and luniform pieces and drying the resultant slices and pieces.

Thus, the objective technical problem which solves the present invention is the preservation of fresh cut lemon at room temperature, regardless of the packaging, with a minimum preservation of the organoleptic properties equal or greater than six months.

### Explanation of the invention

In order to solve the objective technical problem described, the method for preserving fresh cut lemon, object of the present invention comprises at least the following steps: (a) the addition of a covering liquid to the container housing the portions of cut lemon, said liquid combining lemon juice, lime juice, ascorbic acid, citric acid, salt and sodium metabisulphite; (b) the deaeration of the covering liquid; and (c) vacuum packaging by the addition of an nitrogen or water vapor atmosphere.

Optionally, after the deaeration and packaging, there may be an additional treatment step at high pressures of fresh cut lemon introduced in the covering liquid, of at least 300-600 MPa.

Thanks to the method thus described it is achieve to maintain the slices, sections or half-moons of fresh lemon at room temperature a minimum of four months, and up to two years at a refrigerated temperature.

Throughout the description and claims the word "comprises" and its variants are not intended to exclude other technical features, additives, components or steps. For those skills in the art, other objects, advantages and features of the invention will be understood partly of the description and partly of the practice of the invention. The following examples and drawings are provided by way of illustration, and are not intended to be limiting of the present invention. In addition, the present invention covers all possible combinations of particular and preferred embodiments here indicated.

### Detailed exposition of embodiments

In a particular embodiment of the present invention, the method for preserving fresh cut lemon comprises, at least, the following steps:
(a) the addition of a covering liquid to the container housing the portions of fresh cut lemon of a covering liquid essentially made up of lemon juice, lime juice, ascorbic acid, citric acid, salt and sodium metabisulphite;
(b) the deaeration of the covering liquid by applying of vacuum or displacement of oxygen by an inert gas; and
(c) vacuum packaging;

The covering liquid, more specifically, comprises: 65% to 75% of lemon juice; from 25% to 35% of lime juice; from 5% to 0.1% of ascorbic acid; from 5% to 0.1% of citric acid; from 5% to 0.1% of NaCl; and finally a range of sodium metabisulphite from 1 g/l to 0.7 g/l.

### Embodiment of the covering liquid:

In a practical embodiment of the present invention, the covering liquid is made up by 65% of lemon juice (6.25% of lemon concentrate), 30% of lime juice (6.35 of lime concentrate), 2% of ascorbic acid (antioxidant E-300), 1% of citric acid (acidifier and antioxidant E-330), 1% of salt (NaCl) and from 1 g/l to 0.7 g/l of sodium metabisulphite (preservative E-223). With such composition the covering liquid has the following characteristics:
- Density 1.0430 g/l,
- pH 2.12,
- °Brix 9,25 and
- Less than 25 cp of viscosity.

The absence of oxygen is essential for the preservation of the fresh cut lemon, given that one of the factors that cause the non-enzymatic oxidation of ascorbic acid is the presence of oxygen. During the preparation of the product the concentration of oxygen dissolved in the covering liquid is eliminated or reduced by one of the following methods:
(i) replacement of oxygen by an inert gas, by substituting in a practical example oxygen by helium (E-339), which is a noble and inert gas, i.e. this does not react, and whose use is authorized as an alimentary additive (according to RD 1422002), and wherein the replacement has been carried out once formulated the covering liquid by injecting helium at pressure which forms a plurality of micro-bubbles that displace to the dissolved oxygen;
(ii) Removal of oxygen by applying vacuum, wherein it has been used a deaerator consisting of a deposit which also serves as a formulator, a vacuum pump and a compressor, for the vacuum application to the covering liquid; and wherein the covering liquid has been subjected to a given pressure until the oxygen content in the covering liquid is less than 2 mg/l.

Finally, once removed the oxygen present in the covering liquid that bathes the portions of fresh lemon it is proceed to its vacuum packaging by the addition of a nitrogen or water vapor atmosphere.

## Claims

1. Method for preserving fresh cut lemon **characterized in that** comprises, at least, the steps of: (a) the addition of a covering liquid to the container housing the portions of cut lemon, said liquid combining lemon juice, lime juice, ascorbic acid, citric acid, salt and sodium metabisulphite; (b) the deaeration of the covering liquid; and (c) vacuum packaging.

2. Method according to the claim 1 **characterized in that** the covering liquid, more specifically, comprises: from 65% to 75% of lemon juice; from 25% to 35% of lime juice; from 5% to 0.1% of ascorbic acid; from 5% to 0.1% of citric acid; from 5% to 0.1% of salt; and finally a range of sodium metabisulphite from 1 g/l to 0.7 g/l.

3. Method according to the claim 2 **characterized in that** the covering liquid is made up by 65_% of lemon juice, 30% of lime juice, 2% of ascorbic acid, 1% of citric acid, 1% of NaCl and sodium metabisulphite from 1 g/l to 0.7 g/l.

4. Method according to the preceding claims **characterized in that** the deaeration of the covering liquid is carried out by a method selected from: (i) deaeration by oxygen substitution by an inert gas; and (ii) removal of atmosphere by applying vacuum.

5. Method according to the claim 4 **characterized in that** the deaeration by oxygen substitution by an inert gas is carried out once formulated the covering liquid by injecting helium at pressure which forms a plurality of micro-bubbles that displace to the dissolved oxygen.

6. Method according to the claim 4 **characterized in that** in the removal of oxygen by applying vacuum it has been used a deaerator consisting of a deposit which also serves as a formulator, a vacuum pump and a compressor, for the vacuum application to the covering liquid; and wherein the covering liquid has been subjected to a given pressure until the oxygen content in the covering liquid is less than 2 mg/l.

7. Method according to the preceding claims **characterized in that** the vacuum packaging occurs after the addition of an atmosphere selected from nitrogen or water vapor.

8. Method according to the preceding claims **characterized in that** after the deaeration and packaging, there is an additional treatment step at high pressures of fresh cut lemon introduced in the covering liquid, wherein said high pressures are of 300-600 MPa.

## Patentansprüche

1. Verfahren zum Konservieren von frischer geschnittener Zitrone, **dadurch gekennzeichnet, dass** es mindestens die folgenden Schritte umfasst: (a) Zugabe einer Abdeckflüssigkeit zu dem Behälter, der die Portionen von geschnittenen Zitronen aufnimmt, wobei die Flüssigkeit Zitronensaft, Limettensaft, Ascorbinsäure, Zitronensäure, Salz und Natriummetabisulfit kombiniert; (b) die Entlüftung der Abdeckflüssigkeit; und (c) Vakuumverpackung.

2. Verfahren nach Anspruch 1, **dadurch gekennzeichnet, dass** die Abdeckflüssigkeit, spezifischer Folgendes umfasst: 65 % bis 75 % Zitronensaft; von 25 % bis 35 % Limettensaft; von 5 % bis 0,1 % Ascorbinsäure; von 5 % bis 0,1 % Zitronensäure; von 5 % bis 0,1 % Salz; und schließlich Natriummetabisulfit im Bereich von 1 g/l bis 0,7 g/l.

3. Verfahren nach Anspruch 2, **dadurch gekennzeichnet, dass** die Abdeckflüssigkeit zu 65 % aus Zitronensaft, zu 30 % aus Limettensaft, zu 2 % aus Ascorbinsäure, zu 1 % aus Zitronensäure, zu 1 % aus NaCl und von 1 g/l bis 0,7 g/l aus Natriummetabisulfit besteht.

4. Verfahren nach den vorhergehenden Ansprüchen, **dadurch gekennzeichnet, dass** die Entlüftung der Abdeckflüssigkeit durch ein Verfahren ausgeführt wird, das ausgewählt ist aus: (i) Entlüftung mittels Sauerstoffsubstitution durch ein Inertgas; und (ii) Entfernung der Atmosphäre durch Anlegen eines Vakuums.

5. Verfahren nach Anspruch 4, **dadurch gekennzeichnet, dass** die Entlüftung mittels Sauerstoffsubstitution durch ein Inertgas ausgeführt wird, nachdem die Abdeckflüssigkeit formuliert ist, durch Einspritzen von Helium bei einem Druck, der eine Mehrzahl von Mikroblasen bildet, die den gelösten Sauerstoff verdrängen.

6. Verfahren nach Anspruch 4, **dadurch gekennzeichnet, dass** bei der Entfernung von Sauerstoff durch Anlegen eines Vakuums ein Entlüfter verwendet wurde, der aus einem Gefäß, das auch als eine Formulierungsvorrichtung dient, einer Vakuumpumpe und einem Kompressor für die Vakuumanlegung an die Abdeckflüssigkeit besteht; und wobei die Abdeckflüssigkeit einem gegebenen Druck unterzogen wurde, bis der Sauerstoffgehalt in der Abdeckflüssigkeit weniger als 2 mg/l beträgt.

7. Verfahren nach den vorhergehenden Ansprüchen, **dadurch gekennzeichnet, dass** die Vakuumverpackung nach der Zugabe einer Atmosphäre erfolgt, die, ausgewählt ist aus Stickstoff oder Wasserdampf.

8. Verfahren nach den vorhergehenden Ansprüchen, **dadurch gekennzeichnet, dass** nach dem Entlüften und Verpacken ein zusätzlicher Behandlungsschritt bei hohen Drücken von frisch geschnittener Zitrone vorhanden ist, die in die Abdeckflüssigkeit eingeführt wird, wobei die hohen Drücke 300 bis 600 MPa betragen.

## Revendications

1. Procédé pour préserver un citron fraîchement coupé **caractérisé en ce qu'**il comprend, au moins, les étapes consistant à : (a) ajouter un liquide de couverture au conteneur logeant les portions de citron découpé, ledit liquide combinant le jus de citron, le jus de citron vert, l'acide ascorbique, l'acide citrique, le sel et le métabisulfite de sodium ; (b) la désaération du liquide de couverture ; et (c) l'emballage sous vide.

2. Procédé selon la revendication 1 **caractérisé en ce que** le liquide de couverture, plus particulièrement, comprend : de 65 % à 75 % de jus de citron ; de 25 % à 35 % de citron vert ; de 5 % à 0,1 % d'acide ascorbique ; de 5 % à 0,1 % d'acide citrique ; de 5 % à 0,1 % de sel ; et finalement une plage de métabisulfite de sodium de 1 g/l à 0,7 g/l.

3. Procédé selon la revendication 2 **caractérisé en ce que** le liquide de couverture est constitué de 65 % de jus de citron, 30 % de jus de citron vert, 2 % d'acide ascorbique, 1 % d'acide citrique, 1 % de NaCI et de métabisulfite de sodium de 1 g/l à 0,7 g/l.

4. Procédé selon les revendications précédentes **caractérisé en ce que** la désaération du liquide de couverture est mise en oeuvre par un procédé choisi parmi : (i) la désaération par la substitution d'oxygène par un gaz inerte ; et (ii) la suppression de l'atmosphère en appliquant un vide.

5. Procédé selon la revendication 4 **caractérisé en ce que** la désaération par la substitution d'oxygène par un gaz inerte est mise en oeuvre une fois le liquide de couverture formulé en injectant de l'hélium à une pression qui forme une pluralité de microbulles qui remplacent l'oxygène dissout.

6. Procédé selon la revendication 4 **caractérisé en ce que** dans la suppression d'oxygène en appliquant un vide un désaérateur a été utilisé consistant en un dépôt qui fait également office de formulateur, pompe sous vide et compresseur, pour l'application de vide au liquide de couverture ; et dans lequel le liquide de couverture a été soumis à une pression donnée jusqu'à ce que la teneur en oxygène dans le liquide de couverture soit inférieure à 2 mg/l.

7. Procédé selon l'une quelconque des revendications précédentes **caractérisé en ce que** l'emballage sous vide a lieu après l'ajout d'une atmosphère choisie parmi l'azote ou la vapeur d'eau.

8. Procédé selon les revendications précédentes **caractérisé en ce qu'**après la désaération et l'emballage, il y a une étape de traitement additionnelle à des pressions élevées de citron fraîchement coupé introduit dans le liquide de couverture, dans laquelle lesdits hautes pressions sont de 300-600 MPa.
